# EUROPEAN PATENT APPLICATION

(11) **EP 2 744 020 A1**
(43) Date of publication of application: **18.06.2014**
(21) Application number: 12197509.8
(22) Date of filing: 17.12.2012
(51) Int. Cl.: H01M 4/485, C01G 19/00, C01G 55/00, H01M 10/0525, H01M 4/131

(54) **Complex oxide of alkali metal and tetravalent metal**

(71) Applicant: Université de Picardie Jules Verne, 80000 Amiens (FR); Centre National de la Recherche Scientifique, 75016 Paris (FR)
(72) Inventor: Prakash, Annigere, PIN-6000 20 Chennai (IN); Mariyappan, Sathiya, 80080 Amiens (FR); Tarascon, Jean-Marie, 91540 Mennecy (FR); Ramesha, Kannadka, PIN-600 020 Chennai (IN)
(74) Representative: Goulard, Sophie

(57) **Abstract**

The present invention is related to a complex oxide.

The complex oxide has the crystallographic structure of Li₂MO₃ and formula A₂M_{1-y}M'_{y}O₃ where A is Li, Na or a mixture thereof, each of M and M' is a tetravalent metal selected from Ru, Ir, Pt, Sn and Ti, M is different from M', and 0<y<1

The complex oxide can be prepared by a solid state method, comprising mixing precursors of A, M and M' and applying a heat treatment.

The complex oxide is useful as the active electrode material of a lithium ion or a sodium ion battery.

## Description

The present invention related to an electrode material having a crystalline structure similar to that of Li₂MnO₃.

### Background

Lithium Ion Batteries have been recognized as attractive energy storage systems not only for portable electronics but also for powering electric vehicles Performance of lithium ion batteries are governed mainly by the active material used as positive electrode. LiCoO₂, LiMn₂O₄, LiFePO₄ hitherto have been identified as suitable candidates for large scale applications. Still, the achievable specific capacity is lower than 200 mAhg⁻¹ and a big improvement in the capacity values is needed immediately especially for the automobile applications. Manganese containing layered compounds have received much attention recently as they have been regarded as high voltage, high capacity cathode materials. Li₂MnO₃ has a rock salt type layered structure which can be depicted as Li[Li_{⅓}Mn]O₂ in the notion of LiMO₂ layered compounds. In the rock salt type layered structure, the interslab octahedral sites are occupied by Li only, whereas within layers the octahedral sites are occupied by Li and Mn in 1:2 ratio [Strobel, P.; Lambertandron, B.; J. Solid State Chem. 1988, 75, 90-98]. The *ideal capacity* of Li₂MnO₃ alone can be as high as 460 mAh.g⁻¹ which is much higher than that for LiCoO₂ (270 mAh.g⁻¹) and LiFePO₄ (170 mAh.g⁻¹). However Li₂MnO₃ is electrochemically inert as all the Mn in Li₂MnO₃ are in +4 oxidation state and so cannot be oxidized further. Similarly insertion of Li⁺ into Li₂MnO₃ is not possible because all the octahedral sites of the rocksalt structure are fully occupied and also no energetically favorable interstitial sites are available. It has been shown that Li₂MnO₃ can be made electrochemically active by acid leaching (to form Li₂₋ₓMnO_{3-x/2}) [Rossouw, M.H.; Thackeray, M.M.; Mater. Res. Bull., 1991, 26, 463-473] or by low temperature preparations. However, during electrochemical cycling of the compounds obtained *via* said methods, the layer structure transforms to spinel phase. Further attempts to improve the electrochemical property of Li₂MnO₃ resulted in new series of composite cathode materials such as (1-y)Li₂MnO₃ - yLiMO₂ (M = Co, Ni, Cr, etc) [Johnson, C.S. et al., Chem. Mater., 2008, 20, 6095], which exhibited higher capacity and excellent stability. Such composite materials showed specific capacity greater than 200 mAh.g⁻¹. However, cathodes containing said compounds have complex structure and can be either described as [(1-x)LiMO₂.xLi₂MnO₃, M=Ni,Co)] made of rocksalt Li₂MnO₃ and layered LiMO₂ domains or as single phase layered oxides Li[Li_{0.2}Ni_{0.15}Mn_{0.48}Co_{0.17}]O₂ having excess of Li within the metal oxide layers. Domain sizes of Li₂MnO₃ and so on were claimed to play different roles on the electrochemical performances of such materials. This is being created a large amount of animosity regarding patent issues on that topic.

To attack this issue to depart both from the LiMO₂ structure as well as from the nature of the 3d elements (Ni, Co and Mn) used, hence the study of the Li₂Ru_{1-y}M_{y}O₃ system. Such an approach find its origin in noting the richness of the rocksalt Li₂MO₃ as many representatives which can be either insulating (Mn,Sn) or metallic (Ru) so that solid solution should form, hence addressing the composite issue. Members of the Li₂Ru_{1-y}Mn_{y}O₃ solid solution have in the past been studied for their magnetic properties and just recently for their electrochemical properties by Mori et al. [J. Power Sources, 2011, 196, 6934]. Mn is therefore a problematic redox center as it can be reduced to Mn⁺³, which besides being a Jahn Teller is partially soluble in Li-based electrolyte, hence our decision to study the Li₂Ru_{1-y}Sn_{y}O₃ series as Sn(IV) is both not soluble and not easily reduced to Sn (II) (e.g, Sn(III) does not exist).

Li₂MnO₃-Li₂RuO₃ solid solution compositions have high capacities but limited cycling performance owing to intrinsic issue linked to the partial reduction of Mn⁺⁴ causing formation of soluble Mn⁺³ which is detrimental to the long cycle life of an electrode. This phenomenon was previously experienced for the (1-y)Li₂MnO₃ - yLiMO₂ (M = Co, Ni, Cr, etc) composites. The lithium ion battery technology still required an improved electrode material.

### Summary of the invention

The present invention provides an improved cathode material for a lithium ion battery, said material having a high reversible capacity and a long cycling life.

One aspect of the invention is an active electrode material consisting of a complex oxide (I) having the crystallographic structure of Li₂MO₃ and formula A₂M₁₋yM'_{y}O₃ where A is Li, Na or a mixture thereof, each of M and M' is a tetravalent metal selected from Ru, Ir, Pt, Sn and Ti, M is different from M', and 0<y<1.

In an embodiment, the complex oxide is of formula A₂Ru_{1-y}Sn_{y}O₃ where 0.1<y<0.8.

Another aspect of the invention is a composite electrode material containing said complex oxide A₂M_{1-y}M'_{y}O₃ as the active electrode material, optionally an electronic conducting agent and optionally a binder. In an embodiment, the complex oxide is of formula A₂Ru_{1-y}Sn_{y}O₃ where 0.1<y<0.8

A further aspect of the invention is a method to prepare the active electrode material.

### Detailed description

An electrode active material of the invention is a complex oxide having the crystallographic structure of Li₂MO₃ and formula A₂M_{1-y}M'_{y}O₃ where A is Li, Na or a mixture thereof, each of M and M' is a tetravalent metal selected from Ru, Ir, Pt, Sn and Ti, M is different from M', and 0<y<1.

In an embodiment, the complex oxide is of formula Li₂Ru_{1-y}Sn_{y}O₃ having the crystallographic structure of Li₂MnO₃, 0.1<y<0.8.

A compound of the invention can be prepared by a solid state method. The method comprises the steps of:
● Providing precursor powders
● Mixing precursor powders
● Heat treating the mixture of precursor powders.

The Li precursor may be selected from Li₂CO₃, LiCOOCH₃, and LiNO₃. The Sn precursor may be selected from SnC₂O₄, SnO₂, SnCOOCH₃, and Sn(COOCH₃)₂. The Na precursor may be selected from Na₂CO₃, NaCOOCH₃, and NaNO₃. The Ru precursor may be selected from Ru metal powder, and RuO₂. The Pt precursor may be selected from platinum black and platinum (IV) oxide. The Ir precursor may be selected from metallic Iridium powder and IrO₂. The Ti precursor may be selected from TiO₂, Ti powder and titanyl nitrate.

The amounts of the precursors in the precursor mixture preferably correspond to the stoichiometric proportions. The lithium precursor or the sodium precursor may be used with a 10% excess in order to compensate for volatilization at high temperatures.

In an embodiment, treatment comprises the following steps:
- heating the mixture to a temperature of 700°C to 800°C and maintaining the mixture at said temperature for a period of time from 6 to 12 hours (for example 6 hours at 800°C) ;
- heating the mixture to a temperature of 850°C to 900°C and maintaining the mixture at said temperature for a period of time from 12 to 16 hours (for example 12 hours at 900°C) ;
- heating the mixture to a temperature of 1050°C to 1100°C and maintaining the mixture at said temperature for a period of time from 6 to 12 hours (for example 12 hours at 1100°C).

The precursors are mixed by conventional mixing methods such as ball milling, or precipitation / recrystallization so as to have homogeneous precursors.

The heating is carried out at a rate of 2°C to 5°C/min (for example 2°C/min).

The method may comprise a cooling step after each heating step, cooling being carried out at a rate of 2°C to 5°C/min (for example 2°C/min) to bring the mixture at the ambient temperature (about 20°C)

The method may comprise a grinding step after each cooling step. Grinding may be carried out by ball milling.

If the complex oxide (I) is Na₂M_{1-y}M'_{y}O₃, it is preferably transferred in an inert atmosphere to avoid reaction with moisture. The inert atmosphere may be Ar.

A complex oxide (I) in which A is Li is useful as the cathode active material in a lithium ion battery. A complex oxide (I) in which A is Na is useful as the cathode active material in a sodium ion battery

In one aspect, an electrode containing the complex oxide of the invention as the cathode active material is made of a composite electrode material on a current collector. The current collector may be a metal sheet, for instance Al or stainless steel. The composite electrode material contains the complex oxide of the invention, an electronic conducting agent, and optionally a polymer binder. The weight proportions are preferably:

| | |
|---|---|
| Complex oxide | 85 to 72 % |
| Electronic conducting agent | 10 to 20 % |
| Binder | 5 to 8 % |

The invention is further explained by the following examples that illustrate the invention.

### Exemple 1

### Synthesis of Li₂Ru_{1-y}Sn_{y}O₃

Synthesis was carried out by a solid state method. The starting products used are:
- Li₂CO₃ (Sigma-Aldrich, purity 99.0 %),
- RuO₂ (Sigma-Aldrich, purity 99.9%)
- SnC₂O₄ (Sigma-Aldrich, purity 98 %)

The amount of the starting products corresponds to the stoichiometry, except for Li₂CO₃ where a 10% excess is used to compensate for volatilization at high temperatures.

The starting products in powder form were mixed using mortar and pestle for 20 minutes and then ball milled for 40 minutes. Heat treatment of the resultant mixture was carried out according to the following steps:
- heating the mixture at a rate of 2°C/min up to 800°C and maintaining it at 800°C for 6 h;
- cooling the mixture to ambient temperature at a rate of 2°C/min;
- grinding the cooled mixture using high energy ball milling for 40 min;
- heating the mixture at a rate of 2°C/min up to 900°C and maintaining it at 900°C for 12 h;
- cooling the mixture to ambient temperature at a rate of 2°C/min;
- grinding the cooled mixture using high energy ball milling for 40 min;
- heating the mixture at a rate of 2°C/min up to 1100°C and maintaining it at 1100°C for 12 h;
- cooling the mixture to ambient temperature at a rate of 2°C/min;
- grinding the cooled mixture using high energy ball milling for 40 min.

Nine samples were prepared according to this method, using different proportions of reactants to obtain final products with different y values.

The following table summarizes the amounts of starting products for the 9 samples. The amounts are selected to produce about 3 g of Li₂Ru_{1y}Sn_{y}O₃. Samples 2 to 7 are samples according to the invention. Samples 1 and 9 are comparative samples.

| N° | y | | Li₂CO₃ (g) | RuO₂ (g) | SnC₂O₄ (g) |
|---|---|---|---|---|---|
| 1 | 0 | Li₂RuO₃ | 1.4964 | 2.4499 | 0 |
| 2 | 0.2 | Li₂Ru_{0.8}Sn_{0.2}O₃ | 1.4647 | 1.9184 | 0.7451 |
| 3 | 0.25 | Li₂Ru_{0.75}Sn_{0.0.25}O₃ | 1.4570 | 1.7890 | 0.9264 |
| 4 | 0.4 | Li₂Ru_{0.6}Sn_{0.4}O₃ | 1.4343 | 1.4089 | 1.4592 |
| 5 | 0.5 | Li₂Ru_{0.5}Sn_{0.5}O₃ | 1.4196 | 1.1620 | 1.8053 |
| 6 | 0.6 | Li₂Ru_{0.4}Sn_{0.6}O₃ | 1.4051 | 0.9202 | 2.1443 |
| 7 | 0.75 | Li₂Ru_{0.25}Sn_{0.75}O₃ | 1.3840 | 0.5665 | 2.6402 |
| 8 | 0.8 | Li₂Ru_{0.2}Sn_{0.8}O₃ | 1.3771 | 0.4509 | 2.8022 |
| 9 | 1 | Li₂SnO₃ | 1.3502 | 0 | 3.4342 |

### Comparative example 2

### Synthesis of Li₂Ru_{1-y}Mn_{y}O₃

For comparison, Li₂Ru_{0.5}Mn_{0.5}O₃ was prepared according to the method of example 1, using the following starting products:
- 1.7431 g Li₂CO₃ (Sigma-Aldrich, purity 99.0 %),
- 1.4269 g RuO₂ (Sigma-Aldrich, purity 99.9%)
- 1.2326 g MnCO₃ (Sigma-Aldrich, purity 99.9% ).

### Example 3

### XRD characterization

The Li₂Ru_{1-y}Sn_{y}O₃ samples 3, 5 and 7 according to the invention and the comparative samples 1 and 9 of Example 1 were characterized by XR diffraction.

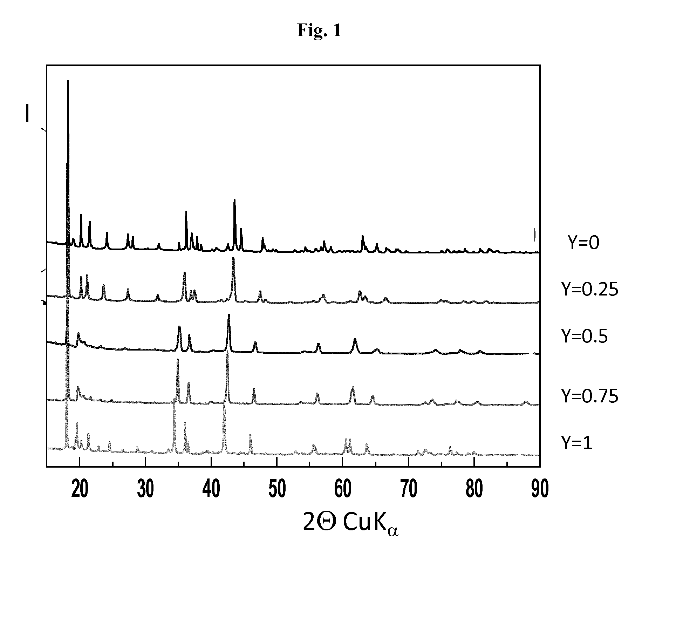

Figure 1 represents the XRD diagram for the various samples of Example 1. The intensity I is in arbitrary unit, and 2Θ CuK_{α} is the diffraction angle. Figure 1 shows that there is a gradual shift of the peaks to lower angles when the amount of Sn grows. This confirms for each value of y, the sample is a complete solid solution.

### Example 4

### Electrochemical characterization

Electrochemical tests were conducted using Swagelok-type™ cells assembled in an argon-filled glove box.

The positive electrode is made of a composite electrode material on an Al collector. The composite electrode material was obtained by ball milling a mixture of 85 wt.% complex oxide and 15 wt.% Super-P Li Carbon (Timcal Belgium) as the conducting additive.

The negative electrode was prepared by pressing a lithium metal film onto a thin stainless steel disc.

The electrolyte used was 1M LiPF₆ solution in a mixture of ethylene carbonate, propylene carbonate and dimethyl carbonate in 1:1:3 ratio by weight.

Cells were made using various complex oxides and each cell was cycled galvanostatically between 2 V and 4.6 V versus lithium at a charge rate of C/5 using a VMP3Z (Biologic) multi-channel potentiostat/galvanostat.

Each sample of table 1 was tested according to the above method. The voltage profiles were the same for each sample (each value of y).

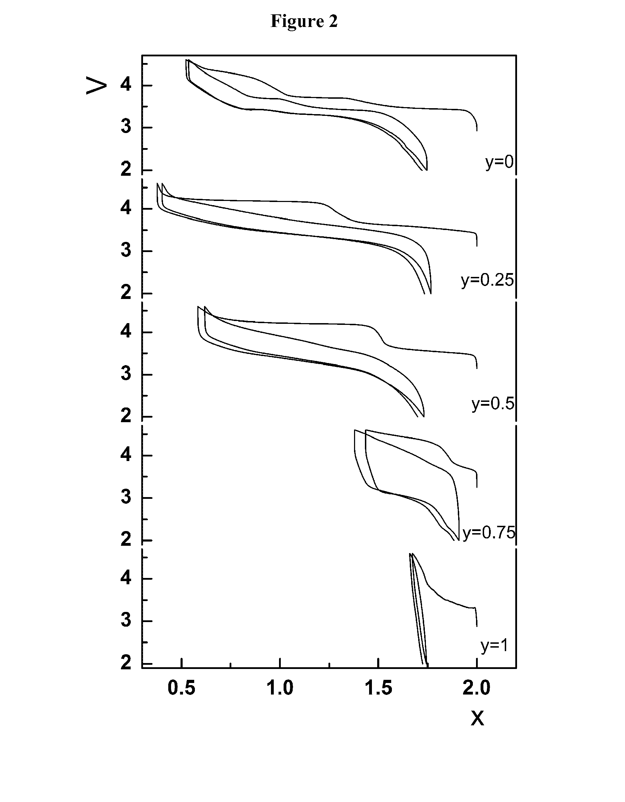

Figure 2 represents the voltage profile obtained by using a positive electrode prepared from samples 1, 3, 5, 7 and 9 of formula Li₂Ru_{1-y}Sn_{y}O₃ which changes to LiₓRu₁₋ySn_{y}O₃, x remaining lower than 2 after start of cycling. Figure 2 shows a stair-case curve during the first charge process which changes to a S-type curve during the first discharge and on subsequent charge/discharges, with therefore the amount of Li uptake and release depending upon the value of y.

Figure 2 shows that Li₂SnO₃ (comparative sample 9) shows a very limited electrochemical capacity (x=0.2) with a 1 V polarization between charge and discharge due to a poor kinetic of the Li uptake-removal process most likely associated to its insulating nature. In contrast, Li₂RuO₃ (comparative sample 1) can practically uptake and release one Li per formula unit at an average voltage of 3.7 V with minimum polarisation owing to its metallic nature. The first charge displays a two steps (3.4 and 3.6 V) removal process which is also found on the second discharge and maintained on subsequent cycles. Replacing progressively Ru by Sn drastically changes the electrochemical properties of the pristine Li₂RuO₃ phase. For all the intermediate members, the charge curve shows a first plateau located near 3.6 V followed by a second plateau at 4.3 V whose amplitude varies with y. Unexpectedly, the following discharge profile as well as the subsequent charge/discharge profiles are totally different as they show a S-type profile. Afterwards the cells using Ru-Sn based electrodes are cycling delivering an output voltage of 3.7 V as compared to 3.5 V for pure Li₂RuO₃ hence leading to greater energy densities for the Ru-Sn compounds.

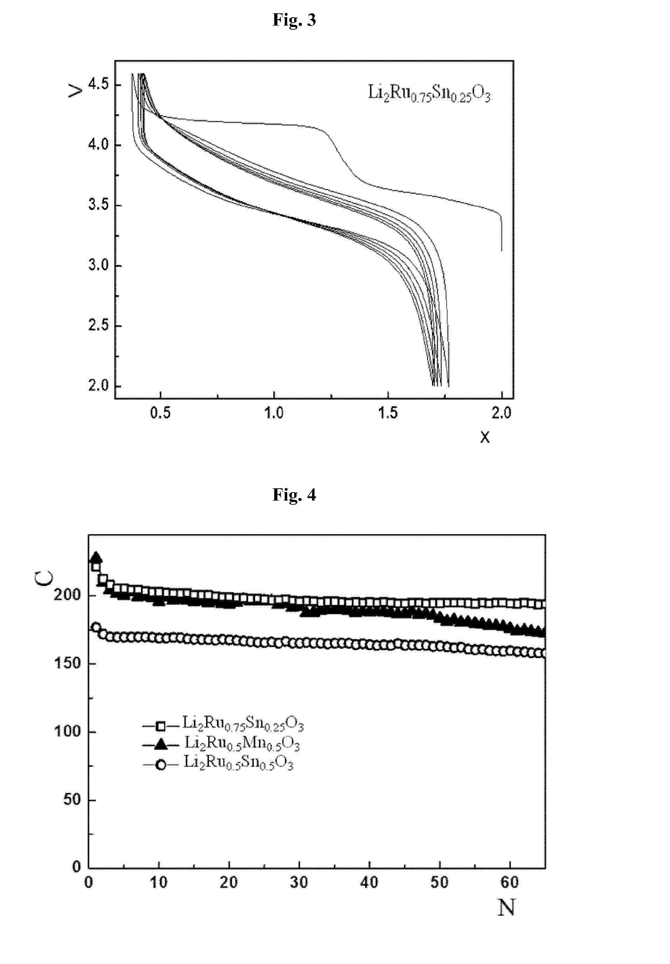

Figure 3 represents the voltage profile obtained by using a positive electrode prepared from sample Li₂Ru_{0.75}Sn_{0.25}O₂ (y=0.25) the formula of which changes to LiₓRu_{0.75}Sn_{0.25}O₂, x remaining lower than 2 after start of cycling. Figure 3 shows a stair-case curve during the first charge process which changes to a S-type curve during the first discharge and on subsequent charge/discharges.

Figure 4 represents the variation of discharge capacity D (mAh/g) of the cell, as a function of the number N of cycles, when using Li₂Ru_{0.75}Sn_{0.25}O₃, Li₂Ru_{0.5}Sn_{0.5}O₃ and Li₂Ru_{0.5}Mn_{0.5}O₃ as the cathode material, respectively. It shows that Li₂Ru_{0.75}Sn_{0.25}O₃ and Li₂Ru_{0.5}Sn_{0.5}O₃ provides a stable capacity over more than 60 cycles, whereas the capacity provided by Li₂Ru_{0.5}Mn_{0.5}O₃ is not stable.

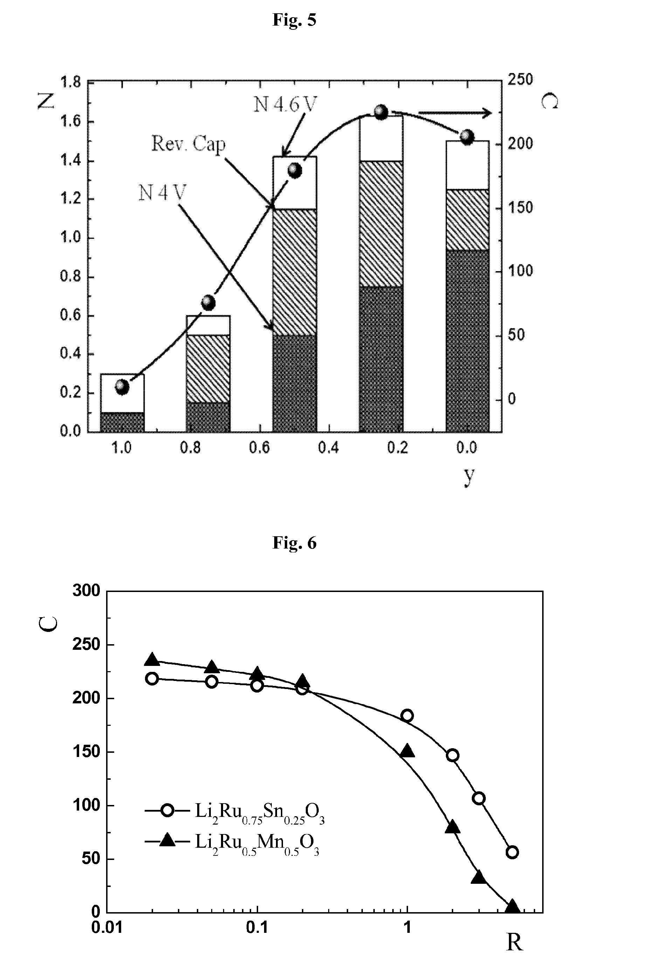

Figure 5 represents a histogram showing the cycling characteristics of various samples of example 1. On figure 5:
- on the left hand vertical scale, N represents
   ● the number of lithium release at the end of the first charge of each cell at 4.6V (top or the upper section of each column), N 4.6V
   ● the overall amount of reversible Li (top of the middle section of each column), Rev. Cap., and
   ● the number of lithium release when charging the cells at a voltage of 4V (top of the lower section of each column) N 4V.
- on the right hand side scale, C represents the capacity in mAh/g. The capacity is shown by the dot at the top of each column
- on the horizontal scale, y identifies the compound Li₂Ru_{1-y}Sn_{y}O₂ used as the starting product.

Figure 5 shows that the best performances are obtained for y=0.25 with the removal of 1.6 Li⁺ upon oxidation and the reversible uptake/removal of 1.3 Li⁺ leading to this compound a capacity of 230 mAh/g; Li₂RuO₃ has no reversible capacity; and Li₂SnO₃ has no conductivity.

Figure 6 represents the change of capacity C (mAh/g), when the charging/discharging rate R changes. The complex oxide Li₂Ru_{0.75}Sn_{0.25}O₃ of the invention has a greater rate capability than the prior art complex oxide Li₂Ru_{0.5}Mn_{0.5}O₃. Li₂Ru_{0.75}Sn_{0.25}O₃ has a great rate capability as nearly 200 mAh/g (90% of the initial capacity) can be tapped at a rate of 1C.

On figure 6:
- the curve defined by 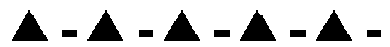 corresponds to the compound Li₂Ru_{0.5}Mn_{0.5}O₃; and
- the curve defined by -o-o-o-o- corresponds to the compound Li₂Ru_{0.75}Sn_{0.25}O₃.

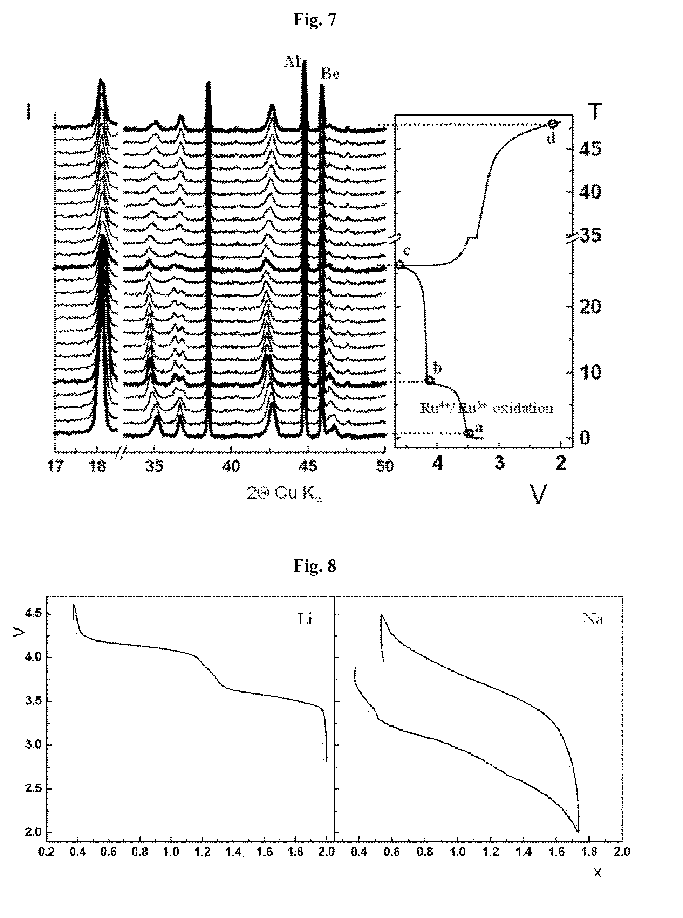

Figure 7 represents the *in situ* XRD diagram for the sample Li₂Ru_{0.5}Sn_{0.5}O₃ used as a cathode material in a Swagelok-type™ cell similar to that used in Example 4, vs. Li⁺/ Li⁰. The left hand vertical scale is the intensity I, in arbitrary units. The right hand vertical scale is the time T, in hours. On the left hand section of the horizontal scale, 2Θ CuK_{α} is the diffraction angle. On the right hand section of the horizontal scale, V is the voltage vs Li⁺/Li, in volts.

The broad lines are the XRD patterns corresponding to the points represented 'a', 'b', 'c' and 'd'. These points and the XRD patterns show the change in the cycling behavior and XRD pattern. Region 'a' to 'b' corresponds to a typical solid solution insertion behavior with Ru⁴⁺/ Ru⁵⁺ redox process. From 'b' to 'c', the plateau region corresponds to oxygen evolution and Li extraction. Points 'c' to 'd' is the discharge curve.

Figure 7 shows that oxidation process that occurs during a charge/discharge cycle at a rate of C/20 is highly reversible while preserving the crystallographic structure: the XRD of the pristine and fully discharged sample superimposed, with the only difference being a broadening of the peaks most likely associated to the creation of vacancies during the first oxidation which remains into the lattice on subsequent cycling.

### Example 5

An electrochemical cell similar to those of Example 4, where the cathode active material is Li₂Ru_{0.5}Sn_{0.5}O₃ was charged to a voltage of 4.6 V vs Li⁺/Li⁰. The complex oxide changed to LiₓRu_{0.5}Sn_{0.5}O₃, x<2. Then, the electrolyte was changed to a 1M NaClO₄ solution in propylene carbonate and the negative electrode was changed to metallic sodium. The modified cell was then discharged, causing intercalation of Na⁺ into the complex oxide structure, thus forming a (LiNa)ₓRu_{0.5}Sn_{0.5}O₃, x≤2.

Figure 8 shows the voltage profile upon 1^{st} charge of the cell (left section) and the voltage profile upon 1^{st} discharge of the cell having the sodium salt electrolyte, and the subsequent charge (right section).

### Example 6

A Na₂Ru_{0.5}Sn_{0.5}O₃ sample was prepared by a solid state method, using the following starting products:
- 1.7157 g Na₂CO₃ (Sigma-Aldrich, purity 99.0 %),
- 0.9791 g RuO₂ (Sigma-Aldrich, purity 99.9%)
- 1.5211 g SnC₂O₄ (Sigma-Aldrich, purity 99.9% ).

The amount of the starting products corresponds to the stoichiometry, except for Na₂CO₃ where a 10% excess is used to compensate for volatilization at high temperatures.

The starting products in powder form were mixed using mortar and pestle for 20 minutes and then ball milled for 40 minutes. Heat treatment of the resultant mixture was carried out according to the following steps:
- heating the mixture at a rate of 2°C/min up to 800°C and maintaining it at 800°C for 6 h,
- Quenching the mixture to room temperature and transferring to Ar atmosphere to avoid reaction with moisture.

### XRD characterization

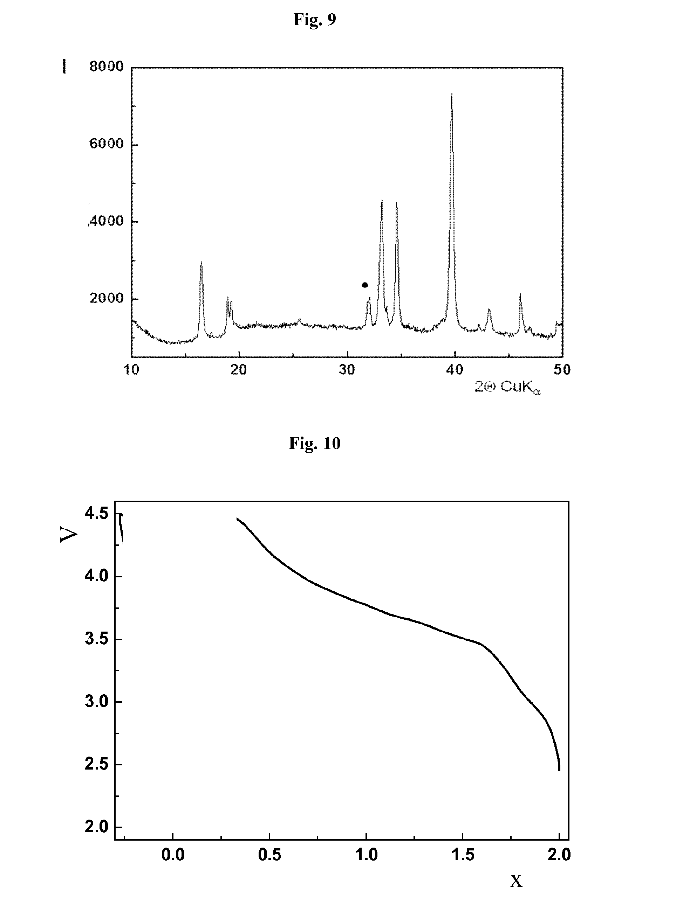

Figure 9 represent the XRD diagram. The intensity I is in arbitrary unit, and 2Θ CuK_{α} is the diffraction angle. The ray marked ● corresponds to a hydrated phase.

### Electrochemical characterization

A cell was assembled as in Example 4, using Na₂Ru_{0.5}Sn_{0.5}O₃ as the cathode active material. The cell was cycled galvanostatically between 2 V and 4.6 V versus lithium at a charge rate of C/5 using a VMP3Z (Biologic) multi-channel potentiostat/galvanostat. The voltage profile for the first charge is represented on figure 10. It shows removal of about 1.5 Na⁺.

## Claims

1. An electrode active material comprising a complex oxide (I) having the crystallographic structure of Li₂MO₃ and formula A₂M_{1-y}M'_{y}O₃ where A is Li, Na or a mixture thereof, each of M and M' is a tetravalent metal selected from Ru, Ir, Pt, Sn and Ti, and M is different from M', 0<y<1.

2. An electrode active material according to claim 1, where the complex oxide (I) is of formula A₂Ru_{1-y}Sn_{y}O₃ and 0<y<1.

3. An electrode material according to claim 1, **characterized in that** the complex oxide (I) is of formula Li₂Ru_{1-y}Sn_{y}O₃, 0.1<y<0.8.

4. A method for preparing a complex oxide according to claim 1, **characterized in that** said comprises the steps of :
● Providing precursor powders
● Mixing precursor powders
● Heat treating the mixture of precursor powders.

5. The method according to claim 3, **characterized in that**:
- the Li precursor is selected from Li₂CO₃, LiCOOCH₃, and LiNO₃;
- the Sn precursor is selected from SnC₂O₄, SnO₂, SnCOOCH₃, and Sn(COOCH₃)₂;
- the sodium precursor is selected from Na₂CO₃, NaCOOCH₃, and NaNO₃;
- the Ru precursor is selected from Ru metal powder, and RuO₂;
- the Pt precursor is selected from platinum black and platinum (IV) oxide;
- the Ir precursor is selected from metallic Iridium powder and IrO₂;
- the Ti precursor is selected from TiO₂, Ti powder and titanyl nitrate.

6. The method according to claim 4, **characterized in that** the amounts of the precursors in the precursor mixture correspond to the stoichiometric proportions.

7. The method according to claim 4, **characterized in that** the heat treatment comprises the following steps:
- heating the mixture to a temperature of 700°C to 800°C and maintaining the mixture at said temperature for a period of time from 6 to 12 hours;
- heating the mixture to a temperature of 850°C to 900°C and maintaining the mixture at said temperature for a period of time from 12 to 16 hours;
- heating the mixture to a temperature of 1050°C to 1100°C and maintaining the mixture at said temperature for a period of time from 6 to 12 hours.

8. The method according to claim 4, **characterized in that** heating is carried out at a rate of 2°C to 5°C/min.

9. The method according to claim 7, **characterized in that** said method further comprises a cooling step after each heating step, cooling being carried out at a rate of 2°C to 5°C/min to bring the mixture at the ambient temperature.

10. The method according to claim 7 to 10, **characterized in that** said method further comprises a grinding step after each cooling step.
